# EUROPÄISCHE PATENTSCHRIFT

(11) **EP 4 153 510 B1**
(45) Veröffentlichungstag und Bekanntmachung des Hinweises auf die Patenterteilung: **11.06.2025**
(21) Anmeldenummer: 21720726.5
(22) Anmeldetag: 20.04.2021
(51) Int. Cl.: B65G 1/137, B66F 9/06, G05B 19/418

(54) **VERFAHREN ZUM BETREIBEN EINER TECHNISCHEN ANLAGE UND TECHNISCHE ANLAGE**
METHOD FOR OPERATING A TECHNICAL INSTALLATION, AND TECHNICAL INSTALLATION
PROCÉDÉ DE COMMANDE D'UNE INSTALLATION TECHNIQUE, ET INSTALLATION TECHNIQUE

(30) Priorität: 20.05.2020 DE 102020003046
(43) Veröffentlichungstag der Anmeldung: 29.03.2023
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÖNUNG, Frank, 76676 Graben-Neudorf (DE); WEIS, Patrick, 75045 Wössingen (DE); ANGST, Michael, 76187 Karlsruhe (DE); FUCHS, Alexander, 76646 Bruchsal (DE); WALZ, Tanja, 75045 Walzbachtal (DE)
(86) Internationale Anmeldenummer: PCT/EP2021/060261
(87) Internationale Veröffentlichungsnummer: WO 2021/233625

(56) Entgegenhaltungen:
- EP-A1- 2 636 618
- EP-A1- 3 521 216
- WO-A1-2017/182134
- WO-A2-2014/111242
- CN-A- 108 363 373
- KR-A- 20190 063 841
- US-A1- 2009 159 396
- US-A1- 2020 122 927

## Beschreibung

Die Erfindung betrifft ein Verfahren zum Betreiben einer technischen Anlage, welche einen Arbeitsbereich zur Herstellung von versandfertigen Produkten aus angelieferten Waren umfasst. Die Erfindung betrifft auch eine technische Anlage, welche einen Arbeitsbereich zur Herstellung von versandfertigen Produkten aus angelieferten Waren umfasst.

Durch Benutzung sind technische Anlagen zur Herstellung von versandfertigen Produkten aus angelieferten Waren bekannt, welche einen Wareneingangsbereich und einen Warenausgangsbereich aufweisen. Waren, die zu der technischen Anlage angeliefert werden, werden dabei in dem Wareneingangsbereich zwischengelagert und anschließend in den Arbeitsbereich hinein transportiert. Hergestellte Produkte werden aus dem Arbeitsbereich heraus transportiert und in dem Warenausgangsbereich bis zum Versand von der technischen Anlage weg zwischengelagert.

Die DE 10 2017 002 963 A1 offenbart eine Fertigungsanlage und ein Verfahren zum Betreiben einer Fertigungsanlage zur Herstellung eines Produktes.

Aus der DE 10 2015 014 714 A1 sind ein System mit mehreren Ladungsträgern und verschiedenen Verkehrsträgern sowie ein Verfahren zum Betreiben eines entsprechenden Systems bekannt. Die Ladungsträger dienen zur Aufnahme und zum Transport von Ladung und sind in der Lage, bei einer Fahrt von einem Start zu einem Ziel selbsttätig einen Verkehrsträger zu wechseln.

Aus der DE 10 2018 204 073 A1 sind ein Transportsystem für mindestens ein zu fertigendes Werkstück sowie ein Verfahren zum Betreiben eines entsprechenden Transportsystems bekannt. Das Transportsystem weist dabei eine bewegbare Transporteinrichtung zum Transport des mindestens einen zu fertigenden Werkstücks auf.

Das Dokument DE 697 33 131 T2 offenbart ein Informationsübertragungssystem zu Benutzung in einer Fabrik.

Aus der EP 2 636 618 A1 sind ein fahrerloses Transportsystem einer Fertigungs- und/oder Verpackungsanlage sowie ein Verfahren zu deren Steuerung bekannt. EP 2 636 618 A1 offenbart ein Verfahren zum Betreiben einer technischen Anlage nach dem Oberbegriff des Anspruchs 1 und eine Technische Anlage nach dem Oberbegriff des Anspruchs 13.

Aus der CN 108363373 A ist ein Verfahren zum Betreiben einer technischen Anlage bekannt, welche einen Arbeitsbereich zur Herstellung von Produkten aus angelieferten Waren umfasst.

Aus der KR 10-2019-0063841 A ist ein Verfahren zum Betreiben einer technischen Anlage bekannt, welche einen Arbeitsbereich zur Herstellung von Produkten aus angelieferten Waren umfasst.

Aus der US 2009/0159396 A1 sind ein tragbares Förderband sowie ein Verfahren zum Betreiben des tragbaren Förderbandes bekannt.

Aus der US 2020/0122927 A1 sind ein System zum Transportieren von Gütern zu Bestimmungsorten sowie ein Verfahren zum Transportieren von Gütern zu Bestimmungsorten bekannt.

Aus der EP 3 521 216 A1 sind ein Roboter zum Transportieren von Material, ein System zum Transportieren von Material und ein Verfahren zum Transportieren von Material bekannt.

Aus der WO 2014/111242 A2 ist eine Fertigungsanlage bekannt, welche mehrere Transportfahrzeuge aufweist.

Aus der WO 2017/182134 A1 sind ein Verfahren zum Betreiben einer Fertigungsanlage sowie eine Fertigungsanlage bekannt.

Der Erfindung liegt die Aufgabe zugrunde, ein Verfahren zum Betreiben einer technischen Anlage sowie eine technische Anlage zu verbessern.

Die Aufgabe wird durch ein Verfahren zum Betreiben einer technischen Anlage mit den im Anspruch 1 angegebenen Merkmalen gelöst. Vorteilhafte Ausgestaltungen und Weiterbildungen sind Gegenstand der Unteransprüche. Die Aufgabe wird auch durch eine technische Anlage mit den in Anspruch 13 angegebenen Merkmalen gelöst.

Es wird ein Verfahren zum Betreiben einer technischen Anlage vorgeschlagen. Die technische Anlage umfasst einen Arbeitsbereich zur Herstellung von versandfertigen Produkten aus angelieferten Waren. Die technische Anlage umfasst beispielsweise ein Gebäude, in welchem der Arbeitsbereich angeordnet ist. Erfindungsgemäß weist die technische Anlage eine Mehrzahl von Ladungsträgern zum Transport von Waren sowie zum Transport von Produkten auf, wobei die Ladungsträger jeweils eine Steuerung, einen mit der Steuerung verbundenen Antrieb und eine Kommunikationsschnittstelle aufweisen. Bei den Ladungsträgern handelt es sich insbesondere um autonom fahrende Fahrzeuge.

Erfindungsgemäß werden Waren zu der technischen Anlage angeliefert. Die Anlieferung erfolgt beispielsweise mittels Kraftfahrzeugen, insbesondere Nutzfahrzeugen, zu dem Gebäude der technischen Anlage. Angelieferte Waren werden von den Ladungsträgern in den Arbeitsbereich hinein transportiert. Insbesondere werden Ladungsträger, auf denen die angelieferten Waren positioniert sind, in das Gebäude der technischen Anlage hinein bewegt. Aus den in den Arbeitsbereich hinein transportierten Waren werden in dem Arbeitsbereich Produkte hergestellt. Hergestellte Produkte werden von den Ladungsträgern aus dem Arbeitsbereich heraus transportiert. Insbesondere werden Ladungsträger, auf denen die hergestellten Produkte positioniert sind, aus dem Gebäude der technischen Anlage heraus bewegt. Aus dem Arbeitsbereich heraus transportierte Produkte werden von der technischen Anlage weg versendet. Der Versand erfolgt beispielsweise mittels Kraftfahrzeugen, insbesondere Nutzfahrzeugen, von dem Gebäude der technischen Anlage.

Beim Betreiben einer technischen Anlage mit dem erfindungsgemäßen Verfahren ist es nicht erforderlich, definierte Wareneingangsbereiche vorzusehen, an welchen angelieferte Waren bis zur weiteren Verarbeitung zwischengelagert werden. Ebenso ist es nicht erforderlich, definierte Warenausgangsbereiche vorzusehen, an welchen hergestellten Produkte bis zum Versand zwischengelagert werden. Ebenso ist ein definiertes Materiallager nicht erforderlich. Angelieferte Waren sowie hergestellte Produkte befinden sich auf Ladungsträgern, die innerhalb der technischen Anlage annähernd frei beweglich sind. Vorteilhaft wird somit Fläche in dem Gebäude der technischen Anlage eingespart, die Investitionskosten für die technische Anlage sind also vorteilhaft verringert.

Erfindungsgemäß werden in dem Arbeitsbereich auf den Ladungsträgern Produkte aus den Waren hergestellt. Vorteilhaft ist dabei kein Umladen der Waren von dem Ladungsträger sowie kein Umladen der Produkte auf den Ladungsträger erforderlich, wodurch Arbeitszeit eingespart wird.

Erfindungsgemäß umfasst mindestens einer der Ladungsträger eine Hubvorrichtung, die eine Plattform zur Aufnahme von Produkten sowie Waren aufweist, wobei die Plattform in eine Vertikalrichtung zwischen einer Ladeposition und einer Arbeitsposition beweglich ist, eine erste Gruppe von Förderrollen, die in Förderrichtung vor der Hubvorrichtung angeordnet sind, und eine zweite Gruppe von Förderrollen, die in Förderrichtung hinter der Hubvorrichtung angeordnet sind.

Gemäß einer vorteilhaften Ausgestaltung der Erfindung ist die technische Anlage als Montagewerk ausgestaltet, und die Produkte werden durch Zusammenfügen der in den Arbeitsbereich hinein transportierten Waren hergestellt. Beispielsweise handelt es sich bei den Waren um Zahnräder, Wellen und Gehäuse, und bei den Produkten handelt es sich um mechanische Getriebe.

Gemäß einer weiteren vorteilhaften Ausgestaltung der Erfindung ist die technische Anlage als Fertigungswerk ausgestaltet, und die Produkte werden durch Bearbeitung der in den Arbeitsbereich hinein transportierten Waren hergestellt. Beispielsweise handelt es sich bei den Waren um Halbzeuge, Profile und/oder Bleche, und die Bearbeitung umfasst Schritte wie beispielsweise Schweißen, Bohren oder Fräsen.

Gemäß einer weiteren vorteilhaften Ausgestaltung der Erfindung ist die technische Anlage als Distributionszentrum ausgestaltet, und die Produkte werden durch Kommissionierung der in den Arbeitsbereich hinein transportierten Waren hergestellt. Beispielsweise handelt es sich bei den Waren um Getriebemotoren, und bei den Produkten handelt es sich um versandfertige Paletten, auf welchen die besagten Waren entsprechend einer Bestellung eines Kunden fertig kommissioniert sind.

Gemäß einer vorteilhaften Ausgestaltung der Erfindung werden Waren, die zu der technischen Anlage angeliefert werden, unmittelbar nach Anlieferung auf Ladungsträger positioniert und von den Ladungsträgern in den Arbeitsbereich hinein transportiert. Beispielsweise werden die Waren mittels eines Kraftfahrzeugs zu dem Gebäude der technischen Anlage angeliefert und von dem Kraftfahrzeug unmittelbar auf den Ladungsträger positioniert, welcher zur Aufnahme von Waren bereit steht. Vorteilhaft sind dabei Ladungsträger nur innerhalb der technischen Anlage erforderlich, nicht jedoch auf dem Kraftfahrzeug.

Gemäß einer anderen vorteilhaften Ausgestaltung der Erfindung werden Ladungsträger mit darauf positionierten Waren zu der technischen Anlage angeliefert und in den Arbeitsbereich hinein transportiert. Beispielsweise werden die Ladungsträger mit darauf positionierten Waren mittels eines Kraftfahrzeugs zu dem Gebäude der technischen Anlage angeliefert und die Ladungsträger werden von dem Kraftfahrzeug entnommen und in den Arbeitsbereich hinein bewegt. Vorteilhaft ist dabei kein Umladen der Waren von dem Kraftfahrzeug auf den Ladungsträger erforderlich, wodurch Arbeitszeit eingespart wird.

Gemäß einer vorteilhaften Weiterbildung der Erfindung werden in den Arbeitsbereich hinein transportierte Waren von den Ladungsträgern entnommen, und aus den entnommenen Waren werden Produkte hergestellt. Der Ladungsträger, von welchem die Waren entnommen werden, steht danach vorteilhaft für andere Aufgaben zur Verfügung.

Gemäß einer weiteren vorteilhaften Weiterbildung der Erfindung werden in dem Arbeitsbereich hergestellte Produkte auf Ladungsträger positioniert und von den Ladungsträgern aus dem Arbeitsbereich heraus transportiert. Der Ladungsträger, auf welchem die Produkte positioniert werden, steht vorher vorteilhaft für andere Aufgaben zur Verfügung.

Vorzugsweise werden die erste Gruppe von Förderrollen und/oder die zweite Gruppe von Förderrollen dabei elektromotorisch angetrieben.

Gemäß einer vorteilhaften Ausgestaltung der Erfindung werden Produkte und/oder Waren auf die erste Gruppe von Förderrollen positioniert. Danach werden die Produkte und/oder Waren von der ersten Gruppe von Förderrollen in Förderrichtung zu der in der Ladeposition befindlichen Plattform der Hubvorrichtung gefördert. Anschließend wird die Plattform mit den auf der Plattform befindlichen Produkten und/oder Waren in Vertikalrichtung von der Ladeposition in die Arbeitsposition bewegt.

Gemäß einer vorteilhaften Ausgestaltung der Erfindung wird die Plattform der Hubvorrichtung mit auf der Plattform befindlichen Produkten und/oder Waren in Vertikalrichtung von der Arbeitsposition in die Ladeposition bewegt. Danach werden die Produkte und/oder Waren von der in der Ladeposition befindlichen Plattform in Förderrichtung zu der zweiten Gruppe von Förderrollen gefördert. Anschließend werden die Produkte und/oder Waren von der zweiten Gruppe von Förderrollen entnommen.

Gemäß einer vorteilhaften Ausgestaltung der Erfindung werden aus dem Arbeitsbereich heraus transportierte Produkte unmittelbar vor Versand von den Ladungsträgern entnommen. Beispielsweise werden die Produkte mittels eines Kraftfahrzeugs von dem Gebäude der technischen Anlage weg versendet und von dem Ladungsträger unmittelbar auf das Kraftfahrzeug positioniert, welches zur Aufnahme der Produkte bereit steht. Vorteilhaft sind dabei Ladungsträger nur innerhalb der technischen Anlage erforderlich, nicht jedoch auf dem Kraftfahrzeug.

Gemäß einer anderen vorteilhaften Ausgestaltung der Erfindung verbleiben aus dem Arbeitsbereich heraus transportierte Produkte auf den Ladungsträgern, und die Ladungsträger werden mit darauf positionierten Produkten versendet. Beispielsweise werden die Ladungsträger mit den darauf positionierten Produkten auf das Kraftfahrzeug verladen, und die Ladungsträger werden mit den darauf positionierten Produkten versendet. Vorteilhaft ist dabei kein Umladen der Produkte von den Ladungsträgern auf das Kraftfahrzeug erforderlich, wodurch Arbeitszeit eingespart wird.

Vorteilhaft wird ein Transport von Waren in den Arbeitsbereich hinein von den Ladungsträgern über deren Kommunikationsschnittstelle einem zentralen Server gemeldet. Vorgänge wie Einbuchen sowie Ausbuchen von Waren in einem Wareneingangsbereich sind somit nicht erforderlich. Auch ist kein manuelles Scannen von Waren durch einen Bediener erforderlich, wodurch Arbeitszeit eingespart wird.

Vorteilhaft wird ein Transport von Produkten aus dem Arbeitsbereich heraus von den Ladungsträgern über deren Kommunikationsschnittstelle einem zentralen Server gemeldet. Vorgänge wie Einbuchen sowie Ausbuchen von Produkten in einem Warenausgangsbereich sind somit nicht erforderlich. Auch ist kein manuelles Scannen von Produkten durch einen Bediener erforderlich, wodurch Arbeitszeit eingespart wird.

Eine erfindungsgemäße technische Anlage umfasst einen Arbeitsbereich zur Herstellung von versandfertigen Produkten aus angelieferten Waren. Dabei ist die technische Anlage mit dem erfindungsgemäßen Verfahren betreibbar. Die technische Anlage umfasst beispielsweise ein Gebäude, in welchem der Arbeitsbereich angeordnet ist und weist eine Mehrzahl von Ladungsträgern zum Transport von Waren sowie zum Transport von Produkten auf, wobei die Ladungsträger jeweils eine Steuerung, einen mit der Steuerung verbundenen Antrieb und eine Kommunikationsschnittstelle aufweisen. Bei den Ladungsträgern handelt es sich insbesondere um autonom fahrende Fahrzeuge.

Erfindungsgemäß umfasst mindestens einer der Ladungsträger eine Hubvorrichtung, die eine Plattform zur Aufnahme von Produkten sowie Waren aufweist, wobei die Plattform in eine Vertikalrichtung zwischen einer Ladeposition und einer Arbeitsposition beweglich ist, eine erste Gruppe von Förderrollen, die in Förderrichtung vor der Hubvorrichtung angeordnet sind, und eine zweite Gruppe von Förderrollen, die in Förderrichtung hinter der Hubvorrichtung angeordnet sind.

Beim Betreiben einer erfindungsgemäßen technischen Anlage mit dem erfindungsgemäßen Verfahren ist es nicht erforderlich, definierte Wareneingangsbereiche vorzusehen, an welchen angelieferte Waren bis zur weiteren Verarbeitung zwischengelagert werden. Ebenso ist es nicht erforderlich, definierte Warenausgangsbereiche vorzusehen, an welchen hergestellten Produkte bis zum Versand zwischengelagert werden. Ebenso ist ein definiertes Materiallager nicht erforderlich. Angelieferte Waren sowie hergestellte Produkte befinden sich auf Ladungsträgern, die innerhalb der technischen Anlage annähernd frei beweglich sind. Vorteilhaft wird somit Fläche in dem Gebäude der technischen Anlage eingespart, die Investitionskosten für die technische Anlage sind also vorteilhaft verringert.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigt:

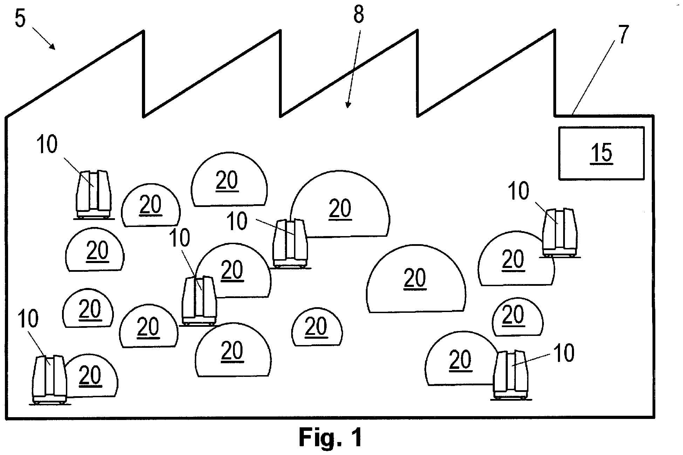

Figur 1: eine schematische Darstellung einer technischen Anlage.

Figur 1 zeigt eine schematische Darstellung einer technischen Anlage 5 zur Herstellung von versandfertigen Produkten aus angelieferten Waren. Bei der technischen Anlage 5 handelt es sich vorliegend um eine industrielle Anwendung. Die technische Anlage 5 umfasst ein Gebäude 7. In dem Gebäude 7 ist ein Arbeitsbereich 8 angeordnet. Der Arbeitsbereich 8 dient zur Herstellung von versandfertigen Produkten aus angelieferten Waren.

Beispielsweise ist die technische Anlage 5 als Montagewerk ausgestaltet, und die Produkte werden durch Zusammenfügen der in den Arbeitsbereich 8 hinein transportierten Waren hergestellt. Beispielsweise handelt es sich bei den Waren um Zahnräder, Wellen und Gehäuse, und bei den Produkten handelt es sich um mechanische Getriebe.

Beispielsweise ist die technische Anlage 5 als Fertigungswerk ausgestaltet, und die Produkte werden durch Bearbeitung der in den Arbeitsbereich 8 hinein transportierten Waren hergestellt. Beispielsweise handelt es sich bei den Waren um Halbzeuge, Profile und/oder Bleche, und die Bearbeitung umfasst Schritte wie beispielsweise Schweißen, Bohren oder Fräsen.

Beispielsweise ist die technische Anlage 5 als Distributionszentrum ausgestaltet, und die Produkte werden durch Kommissionierung der in den Arbeitsbereich 8 hinein transportierten Waren hergestellt. Beispielsweise handelt es sich bei den Waren um Getriebemotoren, und bei den Produkten handelt es sich um versandfertige Paletten, auf welchen die besagten Waren entsprechend einer Bestellung eines Kunden fertig kommissioniert sind.

Der Arbeitsbereich 8 der technische Anlage 5 umfasst mehrere Arbeitsstationen 20. An den Arbeitsstationen 20 ist jeweils mindestens ein Arbeitsschritt durchführbar, welcher zur Herstellung eines Produkts aus Waren erforderlich ist. Bei den Arbeitsstationen 20 handelt es sich beispielsweise um Fertigungsmodule, Montagemodule, Schmierstoffmodule, Lackiermodule, Endprüfungsmodule sowie Module zur Kommissionierung.

Die technische Anlage 5 weist eine Mehrzahl von Ladungsträgern 10 auf. Die Ladungsträger 10 dienen zum Transport von Waren sowie zum Transport von Produkten in der technischen Anlage 5. Die Ladungsträger 10 weisen jeweils eine Steuerung, einen mit der Steuerung verbundenen Antrieb und eine Kommunikationsschnittstelle auf. Bei den Ladungsträgern 10 handelt es sich insbesondere um autonom fahrende Fahrzeuge.

Die technische Anlage 5 weist ferner einen zentralen Server 15 auf. Der zentrale Server 15 dient insbesondere zur Koordination und Planung von Fertigungsaufträgen in der technischen Anlage 5. Der zentrale Server 15 kommuniziert mit den Ladungsträgern 10 über deren Kommunikationsschnittstellen, insbesondere mittels eines drahtlosen Netzwerks. Der zentrale Server 15 kommuniziert ferner mit den Arbeitsstationen 20 des Arbeitsbereichs 8 mittels eines drahtgebundenen oder eines drahtlosen Netzwerks.

Im Betrieb der technischen Anlage 5 werden Waren zu der technischen Anlage 5 angeliefert. Die Anlieferung erfolgt beispielsweise mittels Kraftfahrzeugen, insbesondere Nutzfahrzeugen, zu dem Gebäude 7 der technischen Anlage. Angelieferte Waren werden von den Ladungsträgern 10 in den Arbeitsbereich 8 hinein transportiert. Insbesondere werden die Ladungsträger 10, auf denen die angelieferten Waren positioniert sind, dabei in das Gebäude 7 der technischen Anlage 5 hinein bewegt.

Es ist dabei denkbar, dass Ladungsträger 10 mit darauf positionierten Waren mittels Kraftfahrzeugen zu dem Gebäude 7 der technischen Anlage 5 angeliefert werden. Die besagten Ladungsträger 10 werden dann mit den Waren in den Arbeitsbereich 8 hinein bewegt. Auf diese Art werden die Waren auf den Ladungsträgern 10 in den Arbeitsbereich 8 hinein und zu den Arbeitsstationen 20 transportiert.

Ebenso ist es denkbar, dass die Waren mittels Kraftfahrzeugen zu dem Gebäude 7 der technischen Anlage 5 angeliefert und unmittelbar nach der Anlieferung von den Kraftfahrzeugen unmittelbar auf die Ladungsträger 10 positioniert werden. Anschließend werden die Waren auf den Ladungsträgern 10 in den Arbeitsbereich 8 hinein und zu den Arbeitsstationen 20 transportiert.

Der Transport von Waren in den Arbeitsbereich 8 hinein wird von den Ladungsträgern 10 über deren Kommunikationsschnittstelle dem zentralen Server 15 gemeldet. Somit ist bei dem zentralen Server 15 bekannt, welche Waren angeliefert wurden und in den Arbeitsbereich 8 hinein gelangen.

Aus den Waren, die von den Ladungsträgern 10 in den Arbeitsbereich 8 hinein transportiert werden, werden in dem Arbeitsbereich 8 Produkte hergestellt. Die Produkte werden dabei insbesondere an den Arbeitsstationen 20 hergestellt.

Es ist dabei denkbar, dass die in den Arbeitsbereich 8 hinein transportierte Waren zunächst von den Ladungsträgern 10 entnommen werden. Aus den entnommenen Waren werden dann an den Arbeitsstationen 20 Produkte hergestellt.

Es ist dabei ebenfalls denkbar, dass die in dem Arbeitsbereich 8 an den Arbeitsstationen 20 hergestellten Produkte anschließend wieder auf Ladungsträger 10 positioniert und von den Ladungsträgern 10 aus dem Arbeitsbereich 8 heraus transportiert werden.

Ebenso ist es denkbar, dass in dem Arbeitsbereich 8 an den Arbeitsstationen 20 auf den Ladungsträgern 10 Produkte aus den Waren hergestellt werden. Die Herstellung der Produkte aus den Waren findet also auf den Ladungsträgern 10 statt. Ein Umladen der Waren von dem Ladungsträger 10 herunter sowie ein Umladen der Produkte auf den Ladungsträger 10 ist dabei nicht erforderlich.

Die hergestellten Produkte werden dabei von den Ladungsträgern 10, auf denen die hergestellten Produkte positioniert sind, aus dem Arbeitsbereich 8 der technischen Anlage 5 heraus bewegt. Die aus dem Arbeitsbereich 8 heraus transportierte Produkte werden anschließend von der technischen Anlage 5 weg versendet. Der Versand erfolgt beispielsweise mittels Kraftfahrzeugen von dem Gebäude 7 der technischen Anlage 5.

Es ist dabei denkbar, dass die aus dem Arbeitsbereich 8 heraus transportierte Produkte auf den Ladungsträgern 10 verbleiben. Die Ladungsträger 10 werden also zusammen mit den darauf positionierten Produkten auf die Kraftfahrzeuge verladen, und die Ladungsträger 10 werden mit den darauf positionierten Produkten mittels Kraftfahrzeugen von dem Gebäude 7 der technischen Anlage 5 weg versendet.

Ebenso ist es denkbar, dass die aus dem Arbeitsbereich 8 heraus transportierte Produkte unmittelbar vor dem Versand von den Ladungsträgern 10 entnommen und auf Kraftfahrzeuge positioniert werden. Die Produkte werden dabei mittels Kraftfahrzeugen von dem Gebäude 7 der technischen Anlage 5 weg versendet, während die Ladungsträger 10 in der technischen Anlage 5 verbleiben.

Der Transport von Produkten aus dem Arbeitsbereich 8 heraus wird von den Ladungsträgern 10 über deren Kommunikationsschnittstelle dem zentralen Server 15 gemeldet. Somit ist bei dem zentralen Server 15 bekannt, welche Produkte aus dem Arbeitsbereich 8 heraus gelangen und versendet werden.

### Bezugszeichenliste

- 5: Technische Anlage
- 7: Gebäude
- 8: Arbeitsbereich
- 10: Ladungsträger
- 15: Server
- 20: Arbeitsstation

## Patentansprüche

1. Verfahren zum Betreiben einer technischen Anlage (5), umfassend
einen Arbeitsbereich (8) zur Herstellung von versandfertigen Produkten aus angelieferten Waren, wobei
die technische Anlage (5) eine Mehrzahl von Ladungsträgern (10) zum Transport von Waren sowie zum Transport von Produkten aufweist, wobei
die Ladungsträger (10) jeweils eine Steuerung, einen mit der Steuerung verbundenen Antrieb und eine Kommunikationsschnittstelle aufweisen, wobei
Waren zu der technischen Anlage (5) angeliefert werden, wobei
angelieferte Waren von den Ladungsträgern (10) in den Arbeitsbereich (8) hinein transportiert werden, wobei
aus den in den Arbeitsbereich (8) hinein transportierten Waren in dem Arbeitsbereich (8) Produkte hergestellt werden, wobei
hergestellte Produkte von den Ladungsträgern (10) aus dem Arbeitsbereich (8) heraus transportiert werden, und wobei
aus dem Arbeitsbereich (8) heraus transportierte Produkte von der technischen Anlage (5) weg versendet werden,
**dadurch gekennzeichnet, dass**
in dem Arbeitsbereich (8) auf den Ladungsträgern (10) Produkte aus den Waren hergestellt werden, und dass
mindestens einer der Ladungsträger (10)
eine Hubvorrichtung, die eine Plattform zur Aufnahme von Produkten sowie Waren aufweist,
wobei die Plattform in eine Vertikalrichtung zwischen einer Ladeposition und einer Arbeitsposition beweglich ist,
eine erste Gruppe von Förderrollen, die in Förderrichtung vor der Hubvorrichtung angeordnet sind, und
eine zweite Gruppe von Förderrollen, die in Förderrichtung hinter der Hubvorrichtung angeordnet sind,
umfasst.

2. Verfahren nach Anspruch 1, **dadurch gekennzeichnet, dass**
die technische Anlage (5) als Montagewerk ausgestaltet ist, und die Produkte durch Zusammenfügen der in den Arbeitsbereich (8) hinein transportierten Waren hergestellt werden, oder dass
die technische Anlage (5) als Fertigungswerk ausgestaltet ist, und die Produkte durch Bearbeitung der in den Arbeitsbereich (8) hinein transportierten Waren hergestellt werden, oder dass
die technische Anlage (5) als Distributionszentrum ausgestaltet ist, und die Produkte durch Kommissionierung der in den Arbeitsbereich (8) hinein transportierten Waren hergestellt werden.

3. Verfahren nach einem der vorangegangenen Ansprüche, **dadurch gekennzeichnet, dass** Waren, die zu der technischen Anlage (5) angeliefert werden,
unmittelbar nach Anlieferung auf Ladungsträger (10) positioniert werden und
von den Ladungsträgern (10) in den Arbeitsbereich (8) hinein transportiert werden.

4. Verfahren nach einem der vorangegangenen Ansprüche, **dadurch gekennzeichnet, dass** Ladungsträger (10) mit darauf positionierten Waren zu der technischen Anlage (5) angeliefert und in den Arbeitsbereich (8) hinein transportiert werden.

5. Verfahren nach einem der vorangegangenen Ansprüche, **dadurch gekennzeichnet, dass** in den Arbeitsbereich (8) hinein transportierte Waren von den Ladungsträgern (10) entnommen werden, und dass
aus den entnommenen Waren Produkte hergestellt werden.

6. Verfahren nach einem der vorangegangenen Ansprüche, **dadurch gekennzeichnet, dass** in dem Arbeitsbereich (8) hergestellte Produkte auf Ladungsträger (10) positioniert und von den Ladungsträgern (10) aus dem Arbeitsbereich (8) heraus transportiert werden.

7. Verfahren nach einem der vorangegangenen Ansprüche, **dadurch gekennzeichnet, dass** die erste Gruppe von Förderrollen und/oder die zweite Gruppe von Förderrollen elektromotorisch angetrieben werden.

8. Verfahren nach einem der vorangegangenen Ansprüche, **dadurch gekennzeichnet, dass** Produkte und/oder Waren auf die erste Gruppe von Förderrollen positioniert werden;
die Produkte und/oder Waren von der ersten Gruppe von Förderrollen in Förderrichtung zu der in der Ladeposition befindlichen Plattform der Hubvorrichtung gefördert werden; und
die Plattform mit den auf der Plattform befindlichen Produkten und/oder Waren in Vertikalrichtung von der Ladeposition in die Arbeitsposition bewegt wird.

9. Verfahren nach einem der vorangegangenen Ansprüche, **dadurch gekennzeichnet, dass** die Plattform der Hubvorrichtung mit auf der Plattform befindlichen Produkten und/oder Waren in Vertikalrichtung von der Arbeitsposition in die Ladeposition bewegt wird;
die Produkte und/oder Waren von der in der Ladeposition befindlichen Plattform in Förderrichtung zu der zweiten Gruppe von Förderrollen gefördert werden; und
die Produkte und/oder Waren von der zweiten Gruppe von Förderrollen entnommen werden.

10. Verfahren nach einem der vorangegangenen Ansprüche, **dadurch gekennzeichnet, dass** aus dem Arbeitsbereich (8) heraus transportierte Produkte unmittelbar vor Versand von den Ladungsträgern (10) entnommen werden.

11. Verfahren nach einem der vorangegangenen Ansprüche, **dadurch gekennzeichnet, dass** aus dem Arbeitsbereich (8) heraus transportierte Produkte auf den Ladungsträgern (10) verbleiben, und dass
die Ladungsträger (10) mit darauf positionierten Produkten versendet werden.

12. Verfahren nach einem der vorangegangenen Ansprüche, **dadurch gekennzeichnet, dass** ein Transport von Waren in den Arbeitsbereich (8) hinein von den Ladungsträgern (10) über deren Kommunikationsschnittstelle einem zentralen Server (15) gemeldet wird, und/oder dass ein Transport von Produkten aus dem Arbeitsbereich (8) heraus von den Ladungsträgern (10) über deren Kommunikationsschnittstelle einem zentralen Server (15) gemeldet wird.

13. Technische Anlage (5), umfassend
einen Arbeitsbereich (8) zur Herstellung von versandfertigen Produkten aus angelieferten Waren, wobei
die technische Anlage (5) eine Mehrzahl von Ladungsträgern (10) zum Transport von Waren sowie zum Transport von Produkten aufweist, und wobei
die Ladungsträger (10) jeweils eine Steuerung, einen mit der Steuerung verbundenen Antrieb und eine Kommunikationsschnittstelle aufweisen,
**dadurch gekennzeichnet, dass**
mindestens einer der Ladungsträger (10)
eine Hubvorrichtung, die eine Plattform zur Aufnahme von Produkten sowie Waren aufweist, wobei die Plattform in eine Vertikalrichtung zwischen einer Ladeposition und einer Arbeitsposition beweglich ist,
eine erste Gruppe von Förderrollen, die in Förderrichtung vor der Hubvorrichtung angeordnet sind, und
eine zweite Gruppe von Förderrollen, die in Förderrichtung hinter der Hubvorrichtung angeordnet sind,
umfasst, und dass
die technische Anlage (5) mit dem Verfahren nach einem der vorangegangenen Ansprüche betreibbar ist.

## Claims

1. Method for operating a technical plant (5) comprising
a work area (8) for producing ready-to-ship products from delivered goods, wherein
the technical plant (5) comprises a plurality of load carriers (10) for transporting goods and for transporting products, wherein
each load carrier (10) comprises a controller, a drive connected to the controller, and a communication interface, wherein
goods are delivered to the technical plant (5), wherein
delivered goods are transported into the work area (8) by the load carriers (10), wherein
products are produced in the work area (8) from the goods transported into the work area (8), wherein
produced products are transported out of the work area (8) by the load carriers (10), and wherein
products transported out of the work area (8) are shipped out from the technical plant (5),
**characterized in that**
products are produced from the goods on the load carriers (10) in the work area (8), and **in that**
at least one of the load carriers (10) comprises
a lifting device, which has a platform for receiving products and goods, the platform being movable in a vertical direction between a loading position and a working position,
a first group of conveyor rollers, which are arranged upstream of the lifting device in a conveying direction, and
a second group of conveyor rollers, which are arranged downstream of the lifting device in the conveying direction.

2. Method according to claim 1, **characterized in that**
the technical plant (5) is configured as an assembly plant, and the products are produced by assembling the goods transported into the work area (8), or **in that**
the technical plant (5) is configured as a manufacturing plant, and the products are produced by processing the goods transported into the work area (8), or **in that**
the technical plant (5) is configured as a distribution center, and the products are produced by picking the goods transported into the work area (8).

3. Method according to any one of the preceding claims, **characterized in that**
goods delivered to the technical plant (5)
are positioned on load carriers (10) immediately after delivery and
are transported by the load carriers (10) into the work area (8).

4. Method according to any one of the preceding claims, **characterized in that**
load carriers (10) with goods positioned thereon are delivered to the technical plant (5) and are transported into the work area (8).

5. Method according to any one of the preceding claims, **characterized in that**
goods transported into the work area (8) are removed from the load carriers (10), and **in that**
products are produced from the removed goods.

6. Method according to any one of the preceding claims, **characterized in that**
products produced in the work area (8) are positioned on load carriers (10) and are transported out of the work area (8) by the load carriers (10).

7. Method according to any one of the preceding claims, **characterized in that**
the first group of conveyor rollers and/or the second group of conveyor rollers are driven by an electric motor.

8. Method according to any one of the preceding claims, **characterized in that**
products and/or goods are positioned on the first group of conveyor rollers;
the products and/or goods are conveyed in the conveying direction by the first group of conveyor rollers to the platform of the lifting device, which is in the loading position; and
the platform with the products and/or goods located on the platform is moved in the vertical direction from the loading position into the working position.

9. Method according to any one of the preceding claims, **characterized in that**
the platform of the lifting device with products and/or goods located on the platform is moved in the vertical direction from the working position into the loading position;
the products and/or goods are conveyed in the conveying direction from the platform, which is in the loading position, to the second group of conveyor rollers; and
the products and/or goods are removed by the second group of conveyor rollers.

10. Method according to any one of the preceding claims, **characterized in that**
products transported out of the work area (8) are removed from the load carriers (10) immediately prior to being shipped.

11. Method according to any one of the preceding claims, **characterized in that**
products transported out of the work area (8) remain on the load carriers (10), and **in that**
the load carriers (10) with products positioned thereon are shipped.

12. Method according to any one of the preceding claims, **characterized in that**
a transporting of goods into the work area (8) is reported by the load carriers (10), via the communication interface thereof, to a central server (15), and/or **in that**
a transporting of products out of the work area (8) is reported by the load carriers (10), via the communication interface thereof, to a central server (15).

13. Technical plant (5) comprising
a work area (8) for producing ready-to-ship products from delivered goods, wherein
the technical plant (5) comprises a plurality of load carriers (10) for transporting goods and for transporting products, and wherein
each load carrier (10) comprises a controller, a drive connected to the controller, and a communication interface,
**characterized in that**
at least one of the load carriers (10) comprises
a lifting device, which has a platform for receiving products and goods, the platform being movable in a vertical direction between a loading position and a working position,
a first group of conveyor rollers, which are arranged upstream of the lifting device in a conveying direction, and
a second group of conveyor rollers, which are arranged downstream of the lifting device in the conveying direction, and **in that**
the technical plant (5) can be operated using the method according to any one of the preceding claims.

## Revendications

1. Procédé de fonctionnement d'une installation technique, comprenant
une zone de travail (8) permettant, à partir de marchandises livrées, de fabriquer des produits prêts à être expédiés,
l'installation technique (5) présentant une pluralité de porteurs de charge (10) pour le transport de marchandises et pour le transport de produits,
les porteurs de charge (10) présentant respectivement une commande, un entraînement relié à la commande et une interface de communication,
des marchandises étant livrées à l'installation technique (5),
les marchandises livrées étant transportées depuis les porteurs de charge (10) jusque dans la zone de travail (8),
des produits étant fabriqués dans la zone de travail (8) à partir des marchandises transportées dans la zone de travail (8),
les produits fabriqués étant transportés hors de la zone de travail (8) par les porteurs de charge (10), et
les produits transportés hors de la zone de travail (8) étant expédiés à distance de l'installation technique (5),
**caractérisé en ce que**
les produits sont fabriqués à partir des marchandises dans la zone de travail (8) sur les porteurs de charge (10), et **en ce que**
au moins un des porteurs de charge (10) comprend
un dispositif de levage qui présente une plate-forme permettant de recevoir des produits et des marchandises,
la plate-forme étant mobile dans une direction verticale entre une position de chargement et une position de travail,
un premier groupe de rouleaux de convoyage agencés en amont du dispositif de levage dans la direction de convoyage, et
un second groupe de rouleaux de convoyage agencés en aval du dispositif de levage dans la direction de convoyage

2. Procédé selon la revendication 1, **caractérisé en ce que**
l'installation technique (5) est conçue comme une usine de fabrication discrète, et les produits sont fabriqués par assemblage des marchandises transportées dans la zone de travail (8), ou **en ce que**
l'installation technique (5) est conçue comme une usine de production par processus, et les produits sont fabriqués par traitement des marchandises transportées dans la zone de travail (8), ou **en ce que**
l'installation technique (5) est conçue comme un centre de distribution, et les produits sont fabriqués par conditionnement des marchandises transportées dans la zone de travail (8).

3. Procédé selon l'une quelconque des revendications précédentes, **caractérisé en ce que**
des marchandises livrées à l'installation technique (5)
sont positionnées sur le porteur de charge (10) immédiatement après la livraison et sont transportées dans la zone de travail (8) par les porteurs de charge (10).

4. Procédé selon l'une quelconque des revendications précédentes, **caractérisé en ce que** des porteurs de charge (10) sur lesquels sont positionnées des marchandises sont livrés à l'installation technique (5) et sont transportés dans la zone de travail (8).

5. Procédé selon l'une quelconque des revendications précédentes, **caractérisé en ce que**
des marchandises transportées dans la zone de travail (8) sont retirées des porteurs de charge (10), et **en ce que**
des produits sont fabriqués à partir des marchandises retirées.

6. Procédé selon l'une quelconque des revendications précédentes, **caractérisé en ce que**
des produits fabriqués dans la zone de travail (8) sont positionnés sur des porteurs de charge (10) et sont transportés hors de la zone de travail (8) par les porteurs de charge (10).

7. Procédé selon l'une quelconque des revendications précédentes, **caractérisé en ce que**
le premier groupe de rouleaux de convoyage et/ou le second groupe de rouleaux de convoyage est/sont entraîné(s) par un moteur électrique.

8. Procédé selon l'une quelconque des revendications précédentes, **caractérisé en ce que**
des produits et/ou des marchandises sont positionné(e)s sur le premier groupe de rouleaux de convoyage ;
les produits et/ou les marchandises sont convoyé(e)s par le premier groupe de rouleaux de convoyage dans la direction de convoyage vers la plate-forme du dispositif de levage se trouvant en position de chargement ; et
la plate-forme, avec les produits et/ou les marchandises qui se trouvent dessus, est déplacée verticalement de la position de chargement à la position de travail.

9. Procédé selon l'une quelconque des revendications précédentes, **caractérisé en ce que**
la plate-forme du dispositif de levage, avec les produits et/ou les marchandises qui se trouvent dessus, est déplacée verticalement de la position de travail à la position de chargement ;
les produits et/ou les marchandises sont convoyé(e)s dans la direction de convoyage depuis la plate-forme en position de chargement vers le second groupe de rouleaux de convoyage ; et
les produits et/ou les marchandises sont retiré(e)s du second groupe de rouleaux de convoyage.

10. Procédé selon l'une quelconque des revendications précédentes, **caractérisé en ce que**
des produits transportés hors de la zone de travail (8) sont retirés des porteurs de charge (10) immédiatement avant l'expédition.

11. Procédé selon l'une quelconque des revendications précédentes, **caractérisé en ce que**
des produits transportés hors de la zone de travail (8) restent sur les porteurs de charge (10), et **en ce que**
les porteurs de charge (10) sont expédiés avec les produits positionnés dessus.

12. Procédé selon l'une quelconque des revendications précédentes, **caractérisé en ce que**
un transport de marchandises à destination de la zone de travail (8) est signalé par les porteurs de charge (10) à un serveur central (15) grâce à leur interface de communication, et/ou **en ce qu'**un transport de produits en provenance de la zone de travail (8) est signalé par les porteurs de charge (10) à un serveur central (15) grâce à leur interface de communication.

13. Installation technique (5), comprenant
une zone de travail (8) permettant, à partir de marchandises livrées, de fabriquer des produits prêts à être expédiés,
l'installation technique (5) présentant une pluralité de porteurs de charge (10) pour le transport de marchandises et pour le transport de produits, et
les porteurs de charge (10) présentant respectivement une commande, un entraînement relié à la commande et une interface de communication,
**caractérisée en ce que**
au moins un des porteurs de charge (10) comprend
un dispositif de levage qui présente une plate-forme permettant de recevoir des produits et des marchandises,
la plate-forme étant mobile dans une direction verticale entre une position de chargement et une position de travail,
un premier groupe de rouleaux de convoyage agencés en amont du dispositif de levage dans la direction de convoyage, et
un second groupe de rouleaux de convoyage agencés en aval du dispositif de levage dans la direction de convoyage
et **en ce que**
l'installation technique (5) peut être exploitée en mettant en œuvre le procédé selon l'une quelconque des revendications précédentes.
